(19) Europäisches Patentamt
European Patent Office
Office européen des brevets

(11) **EP 2 238 508 B1**

(12) **FASCICULE DE BREVET EUROPEEN**

(45) Date de publication et mention de la délivrance du brevet:
**15.06.2011 Bulletin 2011/24**

(51) Int Cl.:
**G03B 15/02** *(2006.01)* **B07C 3/14** *(2006.01)*
**G06K 7/12** *(2006.01)*

(21) Numéro de dépôt: **09706875.3**

(22) Date de dépôt: **26.01.2009**

(86) Numéro de dépôt international:
**PCT/FR2009/050110**

(87) Numéro de publication internationale:
**WO 2009/095604 (06.08.2009 Gazette 2009/32)**

(54) **DISPOSITIF D'ACQUISITION D'IMAGES D'ENVOIS POSTAUX COMPRENANT DES MARQUES FLUORESCENTES ET DES MARQUES EN CONTRASTE**

VORRICHTUNG ZUR ERFASSUNG VON BILDERN VON POSTVERPACKUNGEN MIT FLUORESZENTEN MARKIERUNGEN UND KONTRASTMARKEN

DEVICE FOR ACQUIRING IMAGES OF POSTAL PACKAGES COMPRISING FLUORESCENT MARKS AND CONTRAST MARKS

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **28.01.2008 FR 0850507**

(43) Date de publication de la demande:
**13.10.2010 Bulletin 2010/41**

(73) Titulaire: **Solystic**
**94257 Gentilly Cedex (FR)**

(72) Inventeurs:
• **MITTE, Claude**
**F-95370 Montigny Les Cormeilles (FR)**

• **GUIGNARD, Céline**
**F-92130 Issy Les Moulineaux (FR)**

(74) Mandataire: **Prugneau, Philippe**
**Cabinet Prugneau-Schaub**
**3 avenue Doyen Louis Weil**
**Le Grenat - EUROPOLE**
**38000 Grenoble (FR)**

(56) Documents cités:
**WO-A-2007/088290 GB-A- 2 102 610**
**US-A- 5 534 709 US-B1- 6 236 735**

**Description**

L'invention concerne un dispositif d'acquisition d'images de la surface d'un envoi postal comportant des marques fluorescentes et/ou des marques en contraste. En particulier, le dispositif d'acquisition comprend un boîtier dans lequel sont disposés :

- une caméra pour effectuer l'acquisition d'une image de la surface de l'envoi à travers une fenêtre formée dans une paroi du boîtier,
- un premier système d'éclairage agencé pour émettre un rayonnement lumineux à une certaine longueur d'onde propre à exciter la marque fluorescente,
- un second système d'éclairage agencé pour émettre un rayonnement lumineux en lumière visible, et
- un moyen pour empêcher des interférences lumineuses entre le premier et le second système d'éclairage.

Un tel dispositif vise à faire l'acquisition simultanée de codes ou de marques fluorescentes et de marques visibles en contraste apposées sur la surface d'un envoi. Ces deux types de marquage sont généralement destinés à l'identification des envois en machine et/ou au processus de tri de ces envois. La marque fluorescente est par exemple un code à barres fluorescentes qui, une fois décodé, donne des indications concernant le code postal. La marque en contraste visible sur l'envoi est par exemple représentée sous la forme de codes matrices à deux dimensions ou par des caractères en contrastes indicatifs de l'adresse de distribution. Les caractères en contraste sont généralement décodés via un système de reconnaissance optique de caractère OCR («Optical Characters Recognition »). Alternativement, les codes à barres fluorescentes ou en contraste constituent un code d'identification unique de l'envoi généralement représenté par un code à barres.

En conséquence, de plus en plus d'envois postaux sont à la fois munis d'une information d'adresse en contraste visible et d'un code à barres fluorescentes disposés à différents emplacements sur la surface de l'envoi.

Les exigences de performance concernant les machines de tri actuelles sont à l'origine d'un réel besoin pour l'identification et le tri automatique des envois postaux en machine.

On connaît du document FR2895820 un dispositif d'acquisition d'image tel que décrit ci-dessus comprenant deux systèmes d'éclairage pour l'acquisition simultanée d'une marque fluorescente et d'une marque en contraste.

Par ailleurs, le dispositif d'acquisition divulgué dans le document FR2895820 comprend également dans un même boîtier : une caméra et un écran opaque.

Le premier et le deuxième systèmes d'éclairage sont disposés l'un au-dessus de l'autre en regard d'une fenêtre devant laquelle les envois postaux sont convoyés sur chant. La caméra est également disposée en regard de la fenêtre de sorte à effectuer l'acquisition de la surface de l'envoi postal courant éclairé à travers la fenêtre.

Chacun des systèmes d'éclairage est agencé pour émettre dans une zone différente de la fenêtre. A cet effet, un écran plan est disposé au niveau de la fenêtre pour séparer les deux zones et éviter les interférences lumineuses. Ainsi la partie supérieure de la surface de chaque envoi est . éclairée avec une lumière blanche et la partie inférieure est éclairée avec une lumière bleue.

L'encre fluorescente excitée présente la propriété d'émettre de la lumière dont la longueur d'onde est différente de la longueur d'onde d'excitation. D'ailleurs, dans le document FR2895820, le premier système d'éclairage émet une lumière bleue de longueur d'onde de 470 nanomètres pour exciter une encre fluorescente sur la surface de l'envoi. En réponse au rayonnement d'excitation incident, la lumière émise par la marque fluorescente excitée a une longueur d'onde d'environ 600 nanomètres correspondant à la couleur orange.

Le deuxième système d'éclairage émet de la lumière blanche. Cette lumière appartient au domaine du visible dont les longueurs d'ondes se situent entre 400 nanomètres et 750 nanomètres. Ce système d'éclairage permet la lecture d'informations d'adresse figurant en contraste sur la surface des envois.

En conséquence, le dispositif d'acquisition du document FR2895820 est apte à réaliser l'acquisition simultanée d'une marque fluorescente située dans une partie inférieure de la surface de l'envoi et d'une marque visible en contraste située dans la partie supérieure.

Avec un tel système, il n'est pas possible de réaliser l'acquisition de marques fluorescentes et en contraste disposées n'importe où sur toute la surface de l'envoi. Par exemple, si la partie inférieure de l'envoi comprend des marques en contraste, celles-ci ne seront jamais lues par le système d'acquisition du document FR2895820.

La présente invention a pour but de remédier à cet inconvénient, en proposant un dispositif d'acquisition unique capable de lire à la fois des marques fluorescentes et des marques en contraste quelque soit leur position sur la surface de l'envoi. L'invention vise également à accroître les performances d'acquisition d'un tel dispositif tout en diminuant les coûts de fabrication et de maintenance.

A cet effet, l'invention a pour objet un dispositif d'acquisition d'images d'envois postaux, comprenant un boîtier dans lequel sont disposés :

- une première caméra pour l'acquisition d'une image de la surface d'un envoi à travers une première fenêtre formée dans une paroi du boîtier,
- un premier système d'éclairage agencé pour émettre un rayonnement lumineux à une certaine longueur d'onde propre à exciter une marque fluorescente,
- un second système d'éclairage agencé pour émettre un rayonnement lumineux en lumière visible, et
- un moyen prévu pour empêcher des interférences lumineuses entre le premier et le second système d'éclairage,

caractérisé en ce que le dispositif d'acquisition comprend en outre :

- une deuxième caméra disposée dans le boîtier pour former une image de la surface d'un envoi à travers une deuxième fenêtre formée dans une paroi du boîtier, la première et la deuxième fente étant espacées l'une de l'autre,

ladite première caméra coopérant avec ledit premier système d'éclairage pour faire l'acquisition d'une image de la surface d'un envoi à travers ladite première fenêtre, et ladite deuxième caméra coopérant avec ledit deuxième système d'éclairage pour faire l'acquisition d'une image de la surface d'un envoi à travers ladite deuxième fenêtre, et en ce que ledit moyen pour empêcher des interférences lumineuses est de forme concave et disposé entre la première et la deuxième fenêtre, le deuxième système d'éclairage étant disposé dans la cavité dudit moyen pour empêcher des interférences lumineuses.

Dans un mode de réalisation particulier du dispositif d'acquisition selon l'invention, le moyen pour empêcher des interférences lumineuses est un écran opaque présentant une section en forme de V.

Dans un autre mode de réalisation particulier du dispositif d'acquisition selon l'invention, le moyen pour empêcher des interférences lumineuses est un écran opaque en forme d'arc de cercle.

L'expérience montre que l'éclairage à une certaine longueur d'onde d'excitation, par exemple - de couleur bleu, est fortement perturbé par l'éclairage en lumière visible, par exemple de couleur blanche.

En effet, la lecture des marques fluorescentes nécessite un contraste maximum entre le fond de l'image constituée par la surface de l'envoi et la marque fluorescente. La lecture dépend donc du niveau de signal sur bruit de l'image. A cet effet, le dispositif selon l'invention est équipé d'un éclairage à une longueur d'onde précise qui permet d'exciter la marque fluorescente tout en limitant l'excitation du fond de la surface de l'envoi sur lequel la marque est apposée.

La difficulté résolue par l'invention réside dans l'introduction dans un même boîtier d'un éclairage en lumière visible à proximité d'un éclairage dédié à la fluorescence. En effet, un éclairage en lumière visible dit « éclairage blanc » a tendance à perturber l'acquisition de la marque fluorescente en venant exciter le fond de l'image, entraînant alors une chute du contraste et donc une diminution du taux de lecture de la marque fluorescente.

Avantageusement, le dispositif selon l'invention est équipé d'un seul système d'éclairage en lumière visible disposé dans la cavité de l'écran opaque et dirigé à l'opposé du premier système d'éclairage ce qui réduit considérablement les interférences lumineuses. Les performances du système d'acquisition sont ainsi optimisées.

Dans un même boîtier, chaque caméra est donc associée avec une fente ou fenêtre différente et un système d'éclairage adapté à une marque spécifique. Avec les deux systèmes d'éclairage spécialisés et l'écran concave, il est possible de réaliser l'acquisition de marques de types différents quelque soit leur position sur la surface de l'envoi postal.

Par ailleurs, le boîtier unique de taille standard facilite grandement son installation et sa maintenance. Son introduction dans un chemin de convoyage des envois postaux nécessite donc une seule ouverture standard.

Le dispositif d'acquisition d'images selon l'invention peut présenter les particularités suivantes :

- un filtre optique passe bande est placé entre ladite première caméra et ladite première fenêtre;
- le premier système d'éclairage comprend des diodes électroluminescentes disposées de chaque côté de la première fenêtre;
- le deuxième système d'éclairage est disposé d'un côté de la deuxième fenêtre et comprend au moins une diode électroluminescente.

L'invention s'étend à une machine de tri comprenant le dispositif d'acquisition d'images, dans laquelle les envois postaux sont déplacés sur chant devant ledit dispositif d'acquisition selon une certaine direction de convoyage, et dans laquelle le premier système d'éclairage à une certaine longueur d'onde propre à exciter une marque fluorescente est disposé en amont du second système d'éclairage en lumière visible selon ladite direction de convoyage.

Ainsi, le premier système d'éclairage agencé pour émettre un rayonnement lumineux à une certaine longueur d'onde propre à exciter une marque fluorescente ne provoque pas de réflexion persistante sur le fond de la surface de l'envoi qui réduit les performances de l'acquisition de la marque en contraste.

Dans la machine de tri postal selon l'invention, la première et la deuxième fente sont disposées distantes l'une de l'autre le long de la direction de convoyage, la première et la deuxième fente étant sensiblement perpendiculaires à la dite direction de convoyage.

On comprend qu'avec un tel agencement, il est possible d'effectuer l'acquisition de toute la surface de l'envoi en mouvement et donc de faire la lecture de marques appliquées n'importe où sur la surface de l'envoi.

Le dispositif d'acquisition d'images est décrit plus en détail ci-après et illustré par les dessins. Cette description n'est donnée qu'à titre d'exemple indicatif et nullement limitatif de l'invention.

La figure 1 est une représentation schématique de la surface d'un envoi postal comportant une information d'adresse en contraste, un code à barres fluorescentes et un code à barres en contraste.

La figure 2 est une représentation schématique en vue de dessus du dispositif d'acquisition selon l'invention.

La figure 3 est une représentation schématique en vue de dessus d'un mode de réalisation alternatif du dispositif d'acquisition selon l'invention.

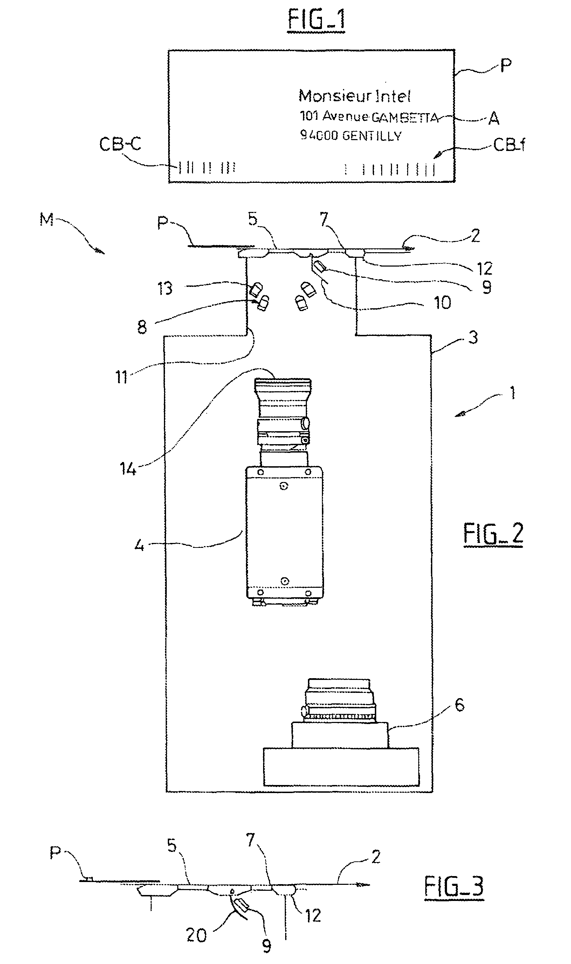

Sur la figure 1, on a illustré un envoi postal P ayant une surface sur laquelle est apposée une information d'adresse de distribution A figurant en contraste visible par exemple en noir sur un fond blanc, un code à barres 1 CB-f imprimé avec une encre fluorescente et un code à barres CB-c en contraste visible. Dans l'exemple de la figure 1, le code à barres fluorescentes CB-f est apposé en bas à droite de la surface de l'envoi P. Le code à barres en contraste est apposé en bas à gauche de la surface de l'envoi. Le code à barres fluorescentes CB-f sert généralement pour le processus de tri postal automatique. Par exemple, il est indicatif du code postal de l'information d'adresse A qui a été précédemment extraite par un procédé classique OCR ou de vidéo-codage. Le code à barres CB-c en contraste visible est par exemple un code d'identification unique de l'envoi postal P.

Le dispositif d'acquisition d'images 1 selon l'invention est illustré sur la figure 2 avec un envoi postal P qui est déplacé sur chant dans une machine de tri M selon le sens indiqué par la flèche 2.

Le dispositif d'acquisition 1 comprend un boîtier ou une boîte noire 3 opaque à la lumière et de forme sensiblement rectangulaire.

Selon l'invention, le boîtier encapsule :

- une première caméra 4 pour l'acquisition d'une image de la surface d'un envoi à travers une première fente ou fenêtre longitudinale 5 formée dans une paroi du boîtier,
- une deuxième caméra 6 également agencée pour l'acquisition d'une image de la surface d'un envoi à travers une deuxième fente ou fenêtre longitudinale 7 formée dans ladite paroi du boîtier,
- un premier système d'éclairage 8 agencé pour émettre un rayonnement lumineux à une certaine longueur d'onde propre à exciter la marque fluorescente CD-f en direction de la première fenêtre 5,
- un second système d'éclairage 9 agencé pour émettre un rayonnement lumineux en lumière visible en direction de la deuxième fenêtre 7, et
- un écran opaque 10 pour empêcher des interférences lumineuses entre le premier 8 et le second 9 système d'éclairage.

En particulier, deux épaulements sont formés sur une paroi du boîtier 3 pour constituer une partie d'insertion du dispositif d'acquisition appelée nez 11. Le nez 11 du système d'acquisition 1 forme un rétrécissement apte à être inséré dans la machine de tri. Les éléments dont le volume est important, comme les caméras 4 et 6, sont dégagés du nez 11 de sorte à limiter l'encombrement du dispositif d'acquisition 1 dans le sens de convoyage 2 au niveau de la zone d'insertion. Inversement, les deux systèmes d'éclairage 8 et 9 présentent un encombrement relativement faible. Ils sont donc logés dans le nez du dispositif d'acquisition.

Une paroi latérale du nez est constituée d'un ski 12 contre lequel la surface de l'envoi postal P vient en appui et glisse lors du déplacement sur chant de l'envoi. L'envoi est donc plaqué contre le ski pour éviter toute réflexion.

Le ski 12 est muni d'une première fenêtre 5 et d'une deuxième fenêtre 7 face auxquelles est déplacé l'envoi P, la première fenêtre 5 étant disposée en amont de la deuxième fenêtre 7 selon le sens de convoyage 2.

Les deux fenêtres longitudinales 5 et 7 forment des fentes distantes l'une de l'autre le long de la direction de convoyage. La première et la deuxième fente sont disposées sensiblement perpendiculaires à la dite direction de convoyage 2 de sorte à chevaucher toute la hauteur de l'envoi déplacé sur chant. Avantageusement, chaque caméra associée avec une fenêtre et un système d'éclairage correspondant peut réaliser l'acquisition de la totalité de la surface de chaque envoi.

Chaque fenêtre 5 et 7 constitue une ouverture entre le boîtier et l'extérieur. De préférence, ces ouvertures sont fermées par un saphir. L'envoi est plaqué contre le saphir pour diminuer encore les réflexions. La fermeture des fenêtres permet en outre de protéger le dispositif d'acquisition de la poussière et d'éviter qu'une partie d'un envoi P ne pénètre dans le boîtier 3 ce qui occasionnerait un bourrage de la machine de tri.

Par ailleurs, une encoche prévue sur le ski 12 est disposée dans le boîtier 3 entre la première et la deuxième fenêtre pour fixer l'écran concave 10. L'encoche permet en outre d'optimiser l'isolation des deux éclairages. L'écran 10 présente une section en forme de V. Comme expliqué ci-après, cet écran opaque de forme concave permet de réduire de manière significative les interférences lumineuses entre les deux systèmes d'éclairage et ainsi de loger dans un même boîtier deux éclairages différents fonctionnant de manière optimale avec deux caméras.

Le système d'éclairage 8 est disposé en amont du système d'éclairage 9 selon la direction indiquée par la flèche 2. Il est par exemple constitué de deux barrettes de diodes électroluminescentes ou LED 13 disposées en deux rangées perpendiculaires à la direction 2 de part et d'autre de la première fenêtre 5. Chaque barrette peut être composée de plusieurs rangées verticales de diodes. Les diodes présentent la particularité d'être très directives. Elles sont donc parfaitement adaptées pour concentrer le rayonnement lumineux vers la première fenêtre 5.

Classiquement, on choisit un système d'éclairage 8 émettant une lumière bleue de longueur d'onde de 470 nanomètres pour exciter une encre fluorescente sur la surface de l'envoi. En réponse au rayonnement d'excitation incident, la lumière émise par la marque fluorescente excitée a une longueur d'onde d'environ 600 nanomètres correspondant à la couleur orange.

De préférence, les diodes électroluminescentes 13 présentent un angle d'incidence faible compris entre 15 et 45 degrés par rapport à l'axe optique de la caméra 4. Les LEDs sont disposées à une distance maximale de 35 millimètre du plan objet. Dans un exemple de réalisation avec plus de deux barrettes de LEDs, il est possible de placer ces barrettes de LEDs en quinconce afin de limiter l'encombrement mécanique de l'éclairage fluorescent. Par exemple, une barrette de LEDs est inclinée de 20 degrés par rapport l'axe optique de la caméra et distante d'environ 32 millimètres du plan objet alors que la deuxième barrette forme un angle de 33 degrés par rapport à l'axe optique de la caméra et est disposée à une distance de 26 millimètres du plan objet.

Cet agencement du système d'éclairage 8 permet de générer dans le plan objet un éclairement suffisamment puissant pour exciter la fluorescence tout en étant très directif. Avec cet agencement, le niveau du signal sur bruit est suffisant pour le décodage de la marque fluorescente et on évite toute interaction de l'éclairage bleu sur l'acquisition de l'image en contraste par la deuxième caméra 6. Le faible angle d'émission des LEDs permet également de positionner les LEDs à différentes distances du plan objet afin de réduire l'encombrement de cet éclairage.

Selon l'invention, le deuxième système d'éclairage 9 est disposé en aval de l'écran 10 selon la direction de déplacement 2 et dans la cavité de cet écran 10. Le deuxième système d'éclairage 9 est donc placé dans l'ombre de l'écran 10 pour supprimer l'impact du premier système d'éclairage 8 dans cette zone. Par conséquent, les interférences entre le premier et le deuxième système d'éclairage sont minimes. Les performances lors de l'acquisition des caméras respectives sont augmentées et la lecture des marques respectives est améliorée.

Le deuxième système d'éclairage 9 se compose par exemple d'une seule barrette de LEDs CMS disposée dans la cavité de l'écran concave à une distance comprise entre 11 et 16 millimètres du plan objet de la caméra 6. De plus, les LEDs sont orientées de manière à former un angle d'incidence compris entre 35 et 55 degrés par rapport à l'axe optique de la caméra 6. Par exemple, pour un angle d'incidence de 45 degrés, la barrette de LEDs est située à 13 millimètres du plan objet. Cette position garantit un niveau d'éclairement maximum dans le plan objet pour un encombrement minimum. L'utilisation des LEDs CMS permet d'atteindre le niveau d'éclairement suffisant pour l'acquisition d'une marque visible en contraste.

La lumière émise par le deuxième système d'éclairage 9 appartient au domaine du visible dont les longueurs d'ondes se situent entre 400 nanomètres et 750 nanomètres. Le système d'éclairage 9 inclut donc la longueur d'onde d'excitation de la marque fluorescente ainsi que la longueur d'onde de la lumière émise par la marque excitée. Par conséquent, la position amont du premier système d'éclairage 8 engendre une émission de lumière rémanente par la surface de l'envoi en déplacement à travers la deuxième fenêtre 7 qui ne nuit pas à l'acquisition de l'image en contraste par la caméra 6. On comprend que, si le deuxième système d'éclairage 9 et la deuxième caméra 6 avaient été placés en amont, les longueurs d'ondes émises par le système d'éclairage 9 auraient engendré sur la surface de l'envoi en déplacement une lumière rémanente perturbant l'acquisition de la caméra 4.

Par exemple, on choisit une caméra linéaire CCD 4 ("Charge-Coupled Device" - Dispositif à Couplage de Charges) de type TDI ("Time Delayed Integration" - Disposition Matricielle) avec un capteur de 1024 pixels comprenant 96 lignes et une sensibilité typique de 1950 nano Joules / cm$^2$. La caméra 4 est configurée de manière à faire l'acquisition d'images d'envois postaux avec une résolution de 8 points par millimètre. La caméra 4 est dédiée à l'acquisition d'une marque fluorescente excitée. A cet effet, elle est équipée d'un filtre optique 14 passe bande centré sur la longueur d'onde d'émission de la marque excitée comme détaillé ci-après. De même, on choisit une deuxième caméra linéaire CCD 6 de type TDI comprenant 64 lignes avec un capteur de 2048 pixels et une sensibilité comprise entre 196 et 200 nano Joules / cm$^2$. La caméra 6 est configurée de manière à faire l'acquisition d'images d'envois postaux avec une résolution de 8 points par millimètre. La sensibilité requise par la caméra 4 est adaptée à l'acquisition de marque fluorescente et supérieure à celle nécessaire à l'acquisition de marque en contraste par la caméra multi- niveaux de gris 6.

La différence de sensibilité des caméras implique une différence de taille de fenêtres et des distances focales différentes. La largeur de la fenêtre « l$_{fenêtre}$ » est déterminée en fonction de la résolution utilisée et du nombre de lignes « nb_lignes » de la caméra. Il est prévu d'ajouter 2 millimètres pour compenser les éventuelles variations de positionnement et 5 millimètres pour le collage de cette fenêtre sur le ski.

Ainsi la largeur d'une fenêtre est définie par :

$$l_{fenêtre} = \frac{nb\_lignes}{resolution} + 7$$

Dans notre exemple de réalisation, les deux fenêtres sont séparées d'une distance d'environ 35 millimètres.

Les différences de focale expliquent la position décalée des caméras. Il est entendu que les caméras 4 et 6 sont orientées de manière à ce que leur axe optique soit normal à la fenêtre correspondante.

En fonctionnement, chaque envoi postal P est déplacé sur chant face à la fenêtre 5 puis face à la fenêtre 7. La surface de l'envoi est d'abord éclairée par le système 8. En réponse au rayonnement d'excitation incident 8, la lumière émise par la ou les marques fluorescentes est filtrée par le filtre optique passe bande ce qui permet d'éviter les perturbations dues à la présence d'autres rayonnements lumineux ayant des longueurs d'ondes différentes dans le boîtier 3. L'image des marques fluorescentes est ensuite acquise à travers la première fenêtre 5 et transmise à un système de traitement (non montré) pour le décodage.

La surface de l'envoi est ensuite éclairée par le système 9 sans perturbation du système 8 comme expliqué précédemment. En réponse à cet éclairage, la ou les marques en contraste émettent un rayonnement pour l'acquisition par la caméra multi-niveaux de gris 6. L'image des marques en contraste visible est acquise à travers la deuxième fenêtre 7 et transmise au système de traitement.

Sur la figure 3, on montre le détail du ski 12 avec les deux fenêtres 5 et 7 entre lesquelles est disposé un écran opaque 20 alternatif. L'écran 20 est en forme d'arc de cercle et remplit la même fonction que l'écran 10 avec une section en forme de V. Sur la figure 3, on montre que le deuxième système d'éclairage 9 est également disposé dans la cavité de l'écran 20.

Il apparaît clairement qu'avec un dispositif d'acquisition selon l'art antérieur, il n'aurait pas été possible d'effectuer l'acquisition d'un marquage fluorescent et d'un marquage visible en contraste disposés à la même hauteur de l'envoi postal déplacé sur chant.

L'invention ne se limite pas à l'exemple de réalisation décrit ci-dessus. Il apparaîtra évident à l'homme du métier que le dispositif d'acquisition selon l'invention est apte à réaliser l'acquisition des deux types de marques quelque soit leur position sur la surface de l'envoi. Il est également entendu que l'invention s'étend à un dispositif d'acquisition dans lequel on modifie le détail du système d'éclairage, le type de caméra et la taille des fenêtres.

## Revendications

1.  Un dispositif d'acquisition d'images (1) d'envois postaux (P), comprenant un boîtier (3) dans lequel sont disposés :

    - une première caméra (4) pour l'acquisition d'une image de la surface d'un envoi à travers une première fenêtre (5) formée dans une paroi du boîtier,
    - un premier système d'éclairage (8) agencé pour émettre un rayonnement lumineux à une certaine longueur d'onde propre à exciter une marque fluorescente (CB-f),
    - un second système d'éclairage (9) agencé pour émettre un rayonnement lumineux en lumière visible, et
    - un moyen (10) prévu pour empêcher des interférences lumineuses entre le premier et le second système d'éclairage, le dispositif d'acquisition comprend en outre :
    - une deuxième camera (6) disposée dans le boîtier pour former une image de la surface d'un envoi à travers une deuxième fenêtre (7) formée dans une paroi du boîtier, la première et la deuxième fenêtre étant espacées l'une de l'autre,

    ladite première caméra (4) coopérant avec ledit premier système d'éclairage (8) pour faire l'acquisition d'une image de la surface d'un envoi à travers ladite première fenêtre (5), et ladite deuxième caméra (6) coopérant avec ledit deuxième système d'éclairage (9) pour faire l'acquisition d'une image de la surface d'un envoi à travers ladite deuxième fenêtre (7), **caractérisé en ce que** ledit moyen (10) pour empêcher des interférences lumineuses est de forme concave et disposé entre la première et la deuxième fenêtre, le deuxième système d'éclairage (9) étant disposé dans la cavité dudit moyen (10) pour empêcher des interférences lumineuses.

2.  Le dispositif d'acquisition d'images selon la revendication 1, dans lequel ledit moyen (10) pour empêcher des interférences lumineuses est un écran opaque présentant une section en forme de V.

**3.** Le dispositif d'acquisition d'images selon la revendication 1, dans lequel ledit moyen (20) pour empêcher des interférences lumineuses est un écran opaque en forme d'arc de cercle.

**4.** Le dispositif d'acquisition d'images selon l'une quelconque des revendications précédentes, dans lequel un filtre optique passe bande (14) est placé entre ladite première caméra et ladite première fenêtre.

**5.** Le dispositif d'acquisition d'images selon l'une quelconque des revendications précédentes, dans lequel le premier système d'éclairage (8) comprend des diodes électroluminescentes (13) disposées de chaque côté de la première fenêtre (5).

**6.** Le dispositif d'acquisition d'images selon l'une quelconque des revendications précédentes, dans lequel le deuxième système d'éclairage (9) est disposé d'un côté de la deuxième fenêtre (7) et comprend au moins une diode électroluminescente.

**7.** Une machine de tri postal (M) comprenant un dispositif d'acquisition d'images selon l'une des revendications précédentes, dans laquelle les envois postaux sont déplacés sur chant devant ledit dispositif d'acquisition (1) selon une certaine direction de convoyage (2), et dans laquelle le premier système d'éclairage (8) à une certaine longueur d'onde propre à exciter une marque fluorescente (CB-f) est disposé en amont du second système d'éclairage (9) en lumière visible selon ladite direction de convoyage.

**8.** La machine de tri postal selon la revendication 7, dans laquelle la première et la deuxième fenêtre (5,7) sont disposées distantes l'une de l'autre le long de la direction de convoyage (2), la première et la deuxième fenêtre étant de forme allongée et sensiblement perpendiculaire à la dite direction de convoyage.

**Claims**

**1.** Image acquisition apparatus (1) for acquiring images of mailpieces (P), the apparatus comprising a housing (3) inside which the following are placed:

· a first camera (14) for acquiring an image of the surface of a mailpiece through a first window (5) formed in a wall of the housing;
· a first lighting system (8) arranged to emit light radiation at a certain wavelength suitable for exciting a fluorescent mark (CB-f);
· a second lighting system (9) arranged to emit light radiation in the visible light domain; and
· means (10) designed to prevent light interference between the first lighting system and the second lighting system;

said image acquisition apparatus further comprises:

· a second camera (6) placed inside the housing for forming an image of the surface of a mailpiece through a second window (7) formed in a wall of the housing, the first and second windows being spaced apart;

said first camera (4) co-operating with said first lighting system (8) to acquire an image of the surface of a mailpiece through said first window (5), and said second camera (6) co-operating with said second lighting system (9) to acquire an image of the surface of a mailpiece through said second window (7), **characterized in that** said means (10) for preventing light interference are concave in shape and are disposed between the first window and the second window, the second lighting system (9) being disposed in the cavity of said means (10) for preventing light interference.

**2.** The image acquisition apparatus according to claim 1, in which said means (10) for preventing light interference are constituted by an opaque screen having a V-shaped section.

**3.** The image acquisition apparatus according to claim 1, in which said means (20) for preventing light interference are constituted by an opaque screen having a circularly arcuate shape.

4. The image acquisition apparatus according to anyone of the preceding claims, in which a band-pass optical filter (14) is placed between said first camera and said first window.

5. The image acquisition apparatus according to anyone of the preceding claims, in which the first lighting system (8) comprises LEDs (13) disposed on either side of the first window (5).

6. The image acquisition apparatus according to anyone of the preceding claims, in which the second lighting system (9) is disposed on one side of the second window (7) and comprises at least one LED.

7. A postal sorting machine (M) including an image acquisition apparatus according to anyone of the preceding claims, in which machine the mailpieces are moved on edge past said acquisition apparatus (1) in a certain conveying direction (2), and in which machine the first lighting system (8) for illumination at a certain wavelength suitable for exciting a fluorescent mark (CB-f) is disposed upstream from the second lighting system (9) for illumination with visible light in said conveying direction.

8. The postal sorting machine according to claim 7, in which the first and second windows (5, 7) are spaced apart along the conveying axis (2), the first and second windows being of elongate shape and being substantially perpendicular to said conveying axis.

**Patentansprüche**

1. Vorrichtung zur Erfassung von Bildern (1) von Postsendungen (P), die ein Gehäuse (3) umfasst, in dem Folgendes angeordnet ist:

   - eine erste Kamera (4) für die Erfassung eines Bildes der Fläche einer Sendung durch ein erstes Fenster (5), das in einer Wand des Gehäuses gebildet ist;
   - ein erstes Beleuchtungssystem (8), das eingerichtet ist, um eine Lichtstrahlung mit einer bestimmten Wellenlänge auszustrahlen, die geeignet ist, eine fluoreszente Markierung (CB-f) anzuregen,
   - ein zweites Beleuchtungssystem (9), das eingerichtet ist, um eine Lichtstrahlung aus sichtbarem Licht auszustrahlen, und
   - ein Mittel (10), das zum Verhindern von Lichtinterferenzen zwischen dem ersten und dem zweiten Beleuchtungssystem vorgesehen ist,

   wobei die Erfassungsvorrichtung ferner Folgendes umfasst:

   - eine zweite Kamera (6), die im Gehäuse angeordnet ist, um durch ein zweites Fenster (7), das in einer Wand des Gehäuses gebildet ist, ein Bild der Fläche einer Sendung zu bilden, wobei das erste und das zweite Fenster voneinander beabstandet sind,

   wobei die erste Kamera (4) mit dem ersten Beleuchtungssystem (8) zusammenwirkt, um durch das erste Fenster (5) ein Bild der Fläche einer Sendung zu erfassen, und die zweite Kamera (6) mit dem zweiten Beleuchtungssystem (9) zusammenwirkt, um durch das zweite Fenster (7) ein Bild der Fläche einer Sendung zu erfassen, **dadurch gekennzeichnet, dass** das Mittel (10) zum Verhindern von Lichtinterferenzen eine konkave Form aufweist und zwischen dem ersten und dem zweiten Fenster angeordnet ist, wobei das zweite Beleuchtungssystem (9) im Hohlraum des Mittels (10) zum Verhindern von Lichtinterferenzen angeordnet ist.

2. Vorrichtung zur Erfassung von Bildern nach Anspruch 1, wobei das Mittel (10) zum Verhindern von Lichtinterferenzen ein opaker Schirm ist, die einen V-förmigen Abschnitt aufweist.

3. Vorrichtung zur Erfassung von Bildern nach Anspruch 1, wobei das Mittel (20) zum Verhindern von Lichtinterferenzen ein kreisbogenförmiger opaker Schirm ist.

4. Vorrichtung zur Erfassung von Bildern nach einem der vorhergehenden Ansprüche, wobei ein optischer Bandpassfilter (14) zwischen der ersten Kamera und dem ersten Fenster untergebracht ist.

5. Vorrichtung zur Erfassung von Bildern nach einem der vorhergehenden Ansprüche, wobei das erste Beleuchtungssystem (8) Leuchtdioden (13) umfasst, die auf jeder Seite des ersten Fensters (5) angeordnet sind.

**6.** Vorrichtung zur Erfassung von Bildern nach einem der vorhergehenden Ansprüche, wobei das zweite Beleuchtungssystem (9) auf einer Seite des zweiten Fensters (7) angeordnet ist und mindestens eine Leuchtdiode umfasst.

**7.** Postsortiermaschine (M), die eine Vorrichtung zur Erfassung von Bildern nach einem der vorhergehenden Ansprüche umfasst, wobei die Postsendungen in einer bestimmten Förderrichtung (2) hochkant vor der Erfassungsvorrichtung (1) vorbei bewegt werden und wobei das erste Beleuchtungssystem (8) mit einer bestimmten Wellenlänge, die geeignet ist, eine fluoreszente Markierung (CB-f) anzuregen, dem zweiten Beleuchtungssystem (9) mit sichtbarem Licht in der Förderrichtung vorgelagert ist.

**8.** Postsortiermaschine nach Anspruch 7, wobei das erste und das zweite Fenster (5, 7) voneinander entfernt entlang der Förderrichtung (2) angeordnet sind, wobei das erste und das zweite Fenster eine Form aufweisen, die länglich und im Wesentlichen senkrecht zur Förderrichtung ist.

EP 2 238 508 B1

## FIG_1

Monsieur Intel
101 Avenue GAMBETTA
94000 GENTILLY

P

A

CB-C

CB-f

## FIG_2

M

P    5    7    2

13    8    11    14    9    12    10

4

1

6

## FIG_3

P    5    7    2

20    9    12

10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2895820